# EUROPEAN PATENT APPLICATION

(11) **EP 2 306 323 A1**
(43) Date of publication of application: **06.04.2011**
(21) Application number: 10179470.9
(22) Date of filing: 24.09.2010
(51) Int. Cl.: G06F 12/08, G06F 11/34

(54) **Trace mode for cache memory system**

(30) Priority: 25.09.2009 GB 0916870
(71) Applicant: STMicroelectronics (Research & Development) Limited, Marlow, Buckinghamshire SL7 1YL (GB)
(72) Inventor: Hill, Mark, Marlow, Buckinghamshire SL7 1YL (GB); Hummel, Martin, Marlow, Buckinghamshire SL7 1YL (GB); Beaumont, John Mark, Marlow, Buckinghamshire SL7 1YL (GB)
(74) Representative: Style, Kelda Camilla Karen

(57) **Abstract**

There is provided a cache. The cache being configurable to operate in at least a cache mode and a trace mode. The cache comprises a cache memory, means for processing data access requests received by the cache, a monitor and means for selecting the cache mode and/or the trace mode. When the cache is operating in the cache mode, the cache memory is arranged to store a copy of a portion of data that is stored in another memory external to the cache. The means for processing data access requests is arranged to process a received data access request by retrieving a copy of a portion of data identified in the received data access request from the cache memory if the cache memory stores a copy of the portion of data, or by forwarding the data access request to a data access request processing means external to the cache if the cache memory does not store a copy of the portion of data. When the cache is operating in the trace mode the monitor is arranged to monitor data access requests received by the cache and capture information relating to a received data access request and the cache memory is arranged to store the information captured by the monitor.

## Description

The present invention relates to cache memory systems.

A very large number of systems require the retrieval of data from a memory by a device. For example, a processor often needs to request data from a system memory or main memory, such as system DRAM (Dynamic Random Access Memory), although other types of devices may request data from other types of memory. In the description below, it is understood that references to data also include processor executable instructions. The amount of time between the device requesting data from the memory, and the data being retrieved from the memory and provided to the device is known as memory latency. In many cases, the memory latency may be very large, for example in comparison to the duration of a processor clock cycle. Memory latencies of several hundred clock cycles are common in existing systems. One problem associated with high memory latency is that a processor requesting data may be required to stall while waiting for the requested data, during which time no useful processing can be achieved.

In order to alleviate this problem, many systems employ a technique known as data caching. In this technique, an additional memory, known as a cache memory, is provided whose access time is quicker than the main memory (i.e. the cache memory has a lower memory latency than the main memory). For example, the cache memory may comprise a memory that is provided on the same integrated circuit as the processor and can thus be accessed by the processor more quickly than a memory external to the processor, such as a separate DRAM memory or hard disc. While being accessible more quickly than the main memory, the cache memory is typically smaller in size due to the higher cost of providing a more quickly accessible memory. The general principle of data caching is to try and anticipate which items of data stored in the main memory will be requested in the future, and to store a copy of, or cache, that data in the cache memory in advance, thereby allowing more rapid access of the data (i.e. from the cache memory) when it is eventually requested.

The various tasks associated with data caching may be performed by additional circuitry associated with the cache memory. A cache memory and associated circuitry is sometimes referred to simply as a cache. Although data caching techniques require additional memory management overhead, if implemented efficiently, these techniques can significantly lower the average memory latency of data accesses.

While some cache memory systems comprise only a single cache, other cache memory systems may comprise a hierarchy of caches. For example, a series of cache memories of increasing size, but increasing memory latency, may be arranged between a processor and a system memory. In this case, a data request, or data access request, issued by the processor is first passed to the top level cache (having the smallest size and latency), sometimes referred to as a Level 1 or L1 cache. If a copy of the data is not cached there, the request is passed to the next level cache in the hierarchy (having the next smallest size and latency), sometimes referred to as a Level 2 or L2 cache. If the data is not cached in the L2 cache then the request is passed further down the cache hierarchy, to caches of increasing size and latency, until, if the requested data is not cached in the lowest level cache, the data is retrieved from the system memory. The retrieved data is then passed up through the cache hierarchy and provided to the processor. As the data is passed up through the cache hierarchy, each cache level decides whether or not to cache the data to speed up access of the data if requested again in the future.

Data caching mechanisms are preferably configured so as to be transparent to the data requesting device. This allows a data requesting device to simply issue a data request specifying the memory address of the requested data. The cache memory system intercepts the request and handles the task of providing the requested data to the device, whether this is achieved by retrieving a copy of the requested data from one of the cache memories, or by forwarding the data request to the main memory. The requesting device is typically unaware of whether the returned data has come from a cache memory or the main memory.

One of the problems associated with data caching techniques is how to predict which items of data will be requested in the future. Various methods, based on data access patterns for example, may be used to try to overcome this problem.

One common property of data access patterns in many systems, known as the principle of temporal locality, can be exploited to try to anticipate future data accesses. This principle states that a portion of data is more likely to be accessed if it has been accessed recently. Therefore, when a portion of data is retrieved, for example from a system memory and provided to a processor, a copy of the retrieved data is stored in a cache memory (in anticipation of the same data being requested again in the near future). Then, if the same data is actually requested again at a later time, rather than accessing the data from the main memory (involving a relatively high latency), a copy of the data can instead be retrieved from the cache memory (with a lower latency). Thus, each time the processor requests data from the main memory, the contents of the cache memory are first checked to determine if a copy of the requested data is stored in the cache memory. If so, then the copy is retrieved from the cache memory and provided to the processor without the main memory being accessed. If not, then the data is retrieved from the main memory and provided to the processor. A copy of the retrieved data is stored in the cache memory for future accesses.

When a cache memory is checked and it is determined that a copy of requested data is stored there, this is sometimes referred to as a cache 'hit'. When it is determined that a copy of requested data is not stored in the cache, this is sometimes referred to as a cache 'miss'.

Another property of data access patterns in many systems, known as the principle of spatial locality, can also be exploited to anticipate future data accesses. This principle states that a portion of data is more likely to be accessed if a portion of data located at a nearby memory address has been accessed recently. Therefore, when a portion of data requested by the processor is retrieved from the main memory, rather than caching a copy of just the requested data in the cache memory, a larger block of data, including both the requested data and adjacent data is stored in the cache (in anticipation of the adjacent data being requested in the near future). In a typical cache memory system for example, a cache memory is divided into fixed-sized regions, for example 32 bytes each, known as cache lines. In order to exploit the principle of spatial locality, when a request is made for a portion of data beginning at a particular memory address, a larger block of data the size of one or more cache lines starting from that memory address is retrieved and cached. Thus, more data than was requested is actually cached. Then, if the additional data is requested at a later time, a copy of that data will already be available in the cache memory.

Some systems employ schemes for detecting specific data access patterns using a stored history of accesses to try to anticipate future accesses based on a detected pattern.

The way in which future data accesses are predicted may be referred to as the prediction policy for the cache. Different prediction policies may be more suited to different applications. The efficiency of the cache memory system will depend on the choice of prediction policy used for a particular application.

When a portion of data is cached, it is necessary to identify or select a particular location in the cache memory (e.g. cache line(s) or cache memory address) in which to store a copy of the data. In some cache designs, a portion of data may be stored in any available location in the cache memory. In other designs, a particular portion of data may only be stored in one of a limited number of cache locations. For example, each system memory address may be mapped onto one or more specific cache locations. When a portion of data retrieved from a particular memory address (Addr) is cached, only those cache locations onto which that memory address (Addr) is mapped may be selected for storing the data. In some designs (sometimes referred to as direct mapped caches), each system memory address is mapped onto only a single cache location, so that a portion of data retrieved from a particular memory address may be cached in only one predetermined cache location. In other designs, each system memory address may be mapped onto multiple cache locations. For example, in a two-way associative cache, each system memory address is mapped onto two cache locations, so that a portion of data retrieved from a particular memory address may be cached in one of two possible cache locations. In either case, since the size of a cache memory is typically smaller than the size of the address space of the system, multiple memory addresses will generally be mapped to each cache location.

The way in which a cache location is selected for caching data is sometimes referred to as the selection policy for the cache. Different selection policies (e.g. direct mapped or two-way associative) have their own advantages and disadvantages, and the choice of selection policy used will depend on the particular application. The efficiency of the cache memory system will depend on the choice of selection policy.

Cache memories are typically relatively small (for example a typical range is 32kB (kilobytes) to 512kB), in comparison to the size of the main memory (for example several gigabytes). Since the total amount of data that could be accessed (and therefore cached) is larger than the size of the cache memory, when a portion of data is to be cached, there may not be any available cache locations in which to store a copy of the data. For example, all valid cache locations in which the portion of data may be stored may already be occupied by previously cached data. In this case, an existing cache entry may be discarded to make space for caching the newly requested data. The process of discarding an existing entry in the cache to make space for new data is sometimes referred to as eviction. In some designs, for example, the selection of an existing cache entry for eviction may be based on how recently, or how many times, existing entries have been accessed. Alternatively, instead of evicting an existing entry, the newly requested data may not be cached.

The way in which an existing cache entry is selected for eviction (and the decision as to whether to cache newly requested data) is sometimes referred to as the replacement policy for the cache. Different replacement policies have their own advantages and disadvantages, and the choice of replacement policy will depend on the particular application. The efficiency of the cache memory system will depend on the choice of replacement policy.

From the foregoing it can be seen that the efficiency of a cache memory system depends on various design choices including the choice of prediction policy, selection policy and replacement policy. One problem associated with designing a cache memory system is that the way in which the efficiency or performance of a cache memory system is affected by changes in design is often difficult to determine. Therefore, it is necessary to test various alternative designs and choose the one providing the best performance.

One method for testing a cache memory system includes monitoring data access requests within the system, collecting information relating to those requests and analysing the results to generate statistics providing an indicator of design performance. For example, statistics relating to a cache miss rate (i.e. the proportion of data requests that result in a cache miss) provides one measure of the efficiency of the cache memory system.

One arrangement for testing a cache memory system comprises means for intercepting data requests and a dedicated memory, referred to as a trace buffer, for storing information relating to detected data access requests. When a data request is detected, relevant information relating to the request is captured and stored as an entry in the trace buffer. Once sufficient information has been captured in the trace buffer, the contents may be read and analysed to generate the statistics.

One problem with the arrangement described above is that a dedicated memory in the form of a trace buffer is required for storing the captured information. The trace buffer is typically not used for any other purpose and so once the trace buffer is no longer required (after the cache design is finalised for example) the trace buffer becomes redundant. The trace buffer therefore uses up valuable space on the system chip, and increases the overall system size and cost.

Another problem is that the size of dedicated trace buffers in known systems are typically relatively small (for example, a few kilobytes) to minimise the amount of space used up by the trace buffer. A dedicated trace buffer is restricted to a small size due to the redundant nature of the trace buffer once the trace buffer has performed its function.

A further problem with known designs is that in order to capture information relating to data access requests it is necessary for the trace buffer hardware to intercept the data access requests. If the data access requests originate from a part of a system implemented as an integrated circuit (for example a processor circuit including an L1 cache), it may be necessary to add a dedicated pin to the integrated circuit for the purpose of passing data access requests specially to the trace buffer hardware. However, the space available on integrated circuit designs for pins is typically very limited, so providing a dedicated pin for the trace function is undesirable, and may not even be possible. Furthermore, passing data access requests to dedicated trace buffer hardware requires additional system bandwidth.

Embodiments of the present invention address these and other problems.

According to a first aspect, there is provided a cache, the cache being configurable to operate in at least a cache mode and a trace mode, the cache comprising: a cache memory; means for processing data access requests received by the cache; a monitor; and means for selecting the cache mode and/or the trace mode; wherein when the cache is operating in the cache mode: the cache memory is arranged to store a copy of a portion of data that is stored in another memory external to the cache; and the means for processing data access requests is arranged to process a received data access request by retrieving a copy of a portion of data identified in the received data access request from the cache memory if the cache memory stores a copy of the portion of data, or by forwarding the data access request to a data access request processing means external to the cache if the cache memory does not store a copy of the portion of data; wherein when the cache is operating in the trace mode: the monitor is arranged to monitor data access requests received by the cache and capture information relating to a received data access request; and the cache memory is arranged to store the information captured by the monitor.

The monitor may comprises means for deriving at least some of the captured information relating to a data access request from the contents of the data access request.

The information captured by the monitor may comprises one or more of: the memory address of requested data, the size of the requested data, the system time of the data access request and the origin of the data access request.

The means for selecting the cache mode or the trace mode may comprises a mode selection configuration register.

The monitor may comprises means for capturing information relating to a data access request only if the information relating to that data access request satisfies one or more information criteria; and in which the cache further comprises means for specifying one or more parameters associated with the one or more information criteria.

The information criteria may include one or more of: the address of the requested data falls within one or more memory address ranges defined by the means for specifying one or more parameters; the size of the requested data is equal to one of one or more sizes specified by the means for specifying one or more parameters; and the type of the information is one of one or more types defined by the means for specifying one or more parameters.

The means for specifying one or more parameters associated with the one or more information criteria may comprise one or more information criteria configuration registers.

The means for processing data access requests may comprises a cache pipeline.

The cache may comprise means for reading the contents of the cache memory out of the cache.

The cache may comprise means for generating an interrupt when operating in the trace mode and when the amount of information stored in the cache memory exceeds a threshold.

The cache may comprise means for reading the contents of the cache memory out of the cache when an interrupt is generated.

The cache memory may further comprise means for stopping information capture by the cache.

The means for stopping information capture may comprise means for stopping information capture by the cache when one or more trace criteria are satisfied.

The trace criteria may include one or more of: the amount of information stored in the cache memory exceeds a threshold; and a certain period of time has elapsed since information capture began.

The cache may be a level 2 cache.

When the cache is operating in the trace mode, the means for processing data access requests may be arranged to process the received data access request by forwarding the data access request to a data access request processing means external to the cache.

When the cache is operating in trace mode and cache mode, the cache memory may comprise a first portion for storing the copy of the portion of data that is stored in another memory external to the cache and a second portion for storing the information captured by the monitor.

According to a second aspect, there is provided a system comprising: a system memory; a processor arranged to issue data access requests for retrieving data stored in the system memory; and a cache interposed between the processor and the system memory, the cache being arranged to intercept data access requests issued by the processor, wherein the cache comprises a cache according to any preceding claim.

According to a third aspect, there is provided a method for capturing information relating to data access requests received by a cache comprising a cache memory, the cache being configurable to operate in at least a cache mode and a trace mode; the method comprising the steps of: placing the cache in the trace mode; monitoring data access requests received by the cache; capturing information relating to a received data access request; and storing the captured information in the cache memory.

Exemplary embodiments of the invention will now be described, with reference to the Figures, in which:
Figure 1 illustrates a system embodying the invention;
Figure 2 illustrates the L2 cache shown in Figure 1 in greater detail;
Figure 3 illustrates the configuration registers shown in Figure 2 in greater detail; and
Figure 4 is a flow diagram of a method embodying the invention.

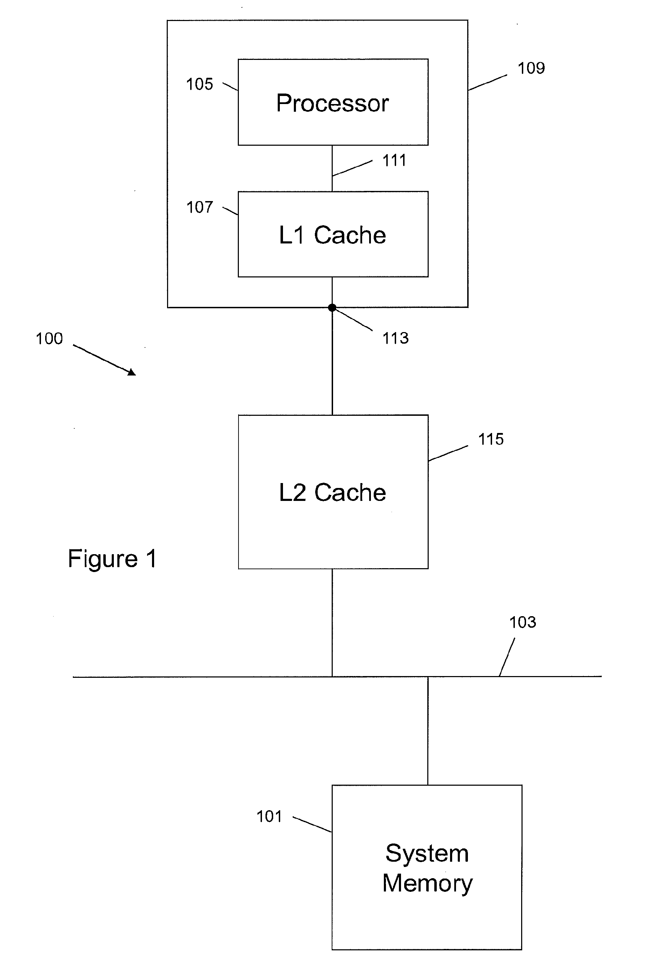

Figure 1 illustrates a system embodying the invention. The system 100 comprises a memory 101, a system data bus 103 and a data requesting device 105. In this example, the data requesting device 105 is a processor and the memory 101 is a DRAM system memory external to the processor 105. The system memory 101 is accessed via the system data bus 103. During operation, the processor 105 may execute a software application requiring the retrieval of data from the memory 101 and/or the storage of data in the memory 101. Therefore, during execution, the software application causes the processor to issue one or more data access requests for storing or retrieving data from the memory 101.

The system 100 further comprises a first cache 107 that is formed on the same integrated circuit 109 as the processor 105. The circuit 109 is referred to below as the ST40. In this example, the cache 107 is a top level, or L1, cache. When the processor 105 issues a data access request on line 111, the L1 cache 107 intercepts the request and checks whether a valid copy of the requested data is stored in the cache memory of the L1 cache 107. If so, the copy of the data is retrieved from the cache memory of the L1 cache 107 and provided to the processor 105. If not, the data request is forwarded by the L1 cache 107 which causes the data access request to appear at a port or pin 113 of the ST40 109.

It can be seen that the appearance of a data access request at the port 113 of the ST40 109 indicates that a cache miss associated with the L1 cache 107 has occurred. If a data request issued by the processor 105 resulted in a L1 cache hit, the L1 cache would be able to service the data request itself. Servicing a data request means providing the requested data to the device requesting the data (either directly or indirectly via other layers of the cache hierarchy). The data request would therefore not be forwarded by the L1 cache 107, and so would not appear at port 113 of the ST40 109. Therefore, information relating to data requests which cause L1 cache misses may be provided by monitoring data requests appearing at port 113 of the ST40 109.

As further illustrated in Figure 1, the system 100 further comprises a second cache 115, which in this embodiment is a second level, or L2, cache. The L2 cache 115 comprises a cache memory for storing a copy of a portion of data that is stored in another memory external to the L2 cache 115 (such as the system memory 101). The L2 cache 115 is configurable to operate in at least two different modes. In a first mode of operation, referred to below as the cache mode, the L2 cache 115 operates as a standard cache, for example in the manner described above. Specifically, in this mode the L2 cache 115 intercepts any data requests appearing at port 113 of the ST40 109 and checks whether a valid copy of the requested data is stored in the cache memory of the L2 cache 115. If so, the copy of the data is retrieved from the cache memory of the L2 cache 115 and passed to the ST40 109. The data is received by the L1 cache 107 which forwards the data to the processor 105. The L1 cache 107 may also decide to cache a copy of the data itself. If a valid copy of the requested data is not stored in the cache memory of the L2 cache, the data request is forwarded by the L2 cache 115 to the system memory 101.

In the illustrated example, the L2 cache 115 is the lowest level cache so, in this case, the data request is forwarded to the system memory 101. However, in other embodiments, further cache levels may be provided, in which case the data request is forwarded to the next level of the cache hierarchy. Once the requested data is provided to the L2 cache 115, the L2 cache 115 forwards the data to the ST40 109 where it is forwarded to the processor by the L1 cache 107 as before. The L2 cache 115 may also decide to cache a copy of the data.

In a second mode of operation, referred to below as the trace mode, the L2 cache 115 does not operate as a standard cache. Instead, in trace mode, the L2 cache 115 operates in a way allowing data access requests to be monitored and allowing information relating to those requests to be captured and stored in the cache memory of the L2 cache for analysis. Such a process is referred to below as a trace. In the example described below, the data access requests that are monitored are those appearing at the port 113 of the ST40 109. However, in other embodiments, other data access requests could be monitored. Examples of information which may be captured and stored during trace mode include: the address of requested data, the size of portions of data being requested, and the system time of data requests. The captured data may then be retrieved and analysed in order to generate statistics relating to the performance of the cache memory system. In this way, the performance or efficiency of different designs may be easily measured.

Since the captured information is stored in the existing cache memory of the L2 cache 115, a dedicated trace buffer or other special memory is not required. The cache memory is effectively re-used as a temporary trace buffer, reducing the number of components required, saving chip space and cost. In addition, since existing cache memories in many systems are typically larger in size than dedicated trace buffers used in known systems, re-using the cache memory as a trace buffer provides a greater memory capacity than a dedicated trace buffer. This allows embodiments of the invention to capture more information before the data needs to be read than existing designs. Furthermore, relatively small modifications of existing cache designs are required to implement the trace mode functionality of embodiments of the invention.

In the illustrated embodiment, the L2 cache 115 is provided with trace mode functionality. Therefore, in this embodiment, the trace mode is well suited to capturing information relating to data requests appearing at the port 113 of the ST40 109 with minimal modifications of the overall system, since these are the data requests that are received normally by the L2 cache. Since data requests appearing at the port 113 of the ST40 are those resulting from L1 cache misses, and are those which would normally be handled by the L2 cache 115, the resulting information captured can be used for analysis in relation to the design and operation of both the L1 cache 107 and L2 cache 115. However, any other level cache within a cache memory system may be provided with similar trace mode functionality.

Since data access requests appearing at port 113 are intercepted by the L2 cache during normal operation, neither an additional dedicated pin or port on the ST40, nor any additional bandwidth, are required for passing data access requests from the origin of the data access requests (which in this case is the ST40) to the hardware for performing trace mode functions (which in this example is the L2 cache).

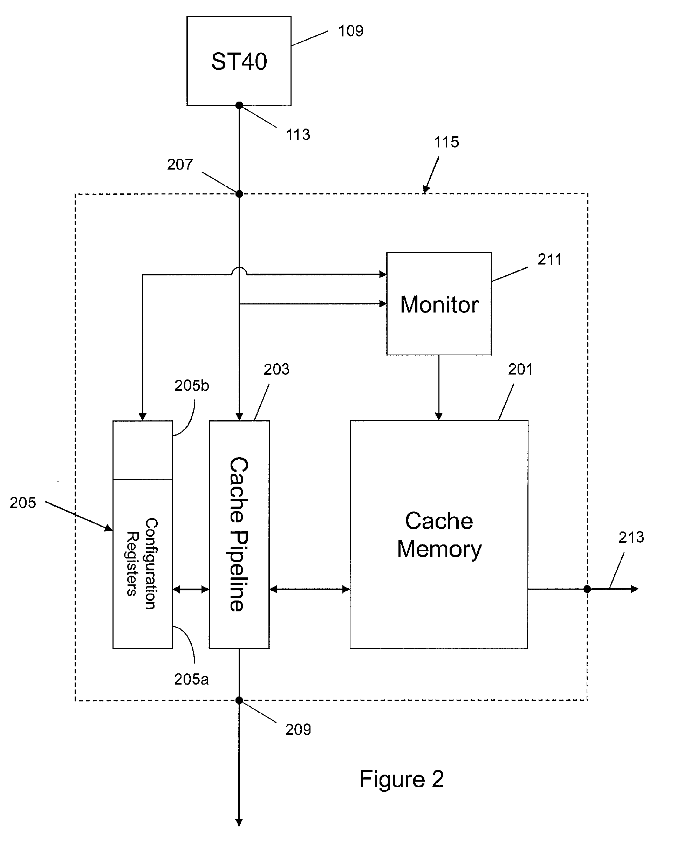

Figure 2 illustrates the L2 cache 115 shown in Figure 1 in greater detail. The L2 cache 115 comprises a cache memory 201 in the form of a RAM block, a cache pipeline 203 and a bank of configuration registers 205. The cache memory 201 is used to store cached data during the cache mode of operation, and is used to store information relating to data access requests in the trace mode of operation. The cache pipeline 203 is used to process data access requests. The configuration registers 205 are used to configure the L2 cache 115. One of the configuration registers 205 is used to switch the L2 cache 115 between cache mode and trace mode.

As described in greater detail below, the way in which a data access request is processed, or handled, by the L2 cache 115 depends on whether or not the L2 cache 115 can service the data request itself. If the L2 cache 115 stores a valid copy of the requested data then the L2 cache 115 can service the data request itself. In this case, the L2 cache 115 processes the data access request by retrieving the stored copy of the requested data and providing this to the data requesting device (either directly or indirectly via other layers of the cache hierarchy). If the L2 cache 115 does not store a valid copy of the requested data then the L2 cache 115 cannot service the data access request itself. In this case, the L2 cache 115 processes the data access request by forwarding the data access request to another component (external to the L2 cache 115) for processing the data access request. Such a component may comprise, for example, the next level in the cache hierarchy or the system memory 101. This component then attempts to process the data access request in a similar way to the L2 cache 115, by either servicing the data access request itself or forwarding the data access request again. Forwarding a data access request if it cannot be serviced maximises the chance that the data access request will be ultimately serviced by another part of the overall memory system.

In some embodiments, forwarding a received data access request comprises transmitting the same data access request, or a data access request having substantially the same format and/or information content as the received data access request. However, in other embodiments, forwarding a received data access request comprises transmitting a data access request having a different format and/or information content to the received data access request. For example, the forwarded data access request may comprise information identifying the data access request as one that has been forwarded by the L2 cache 115. In some embodiments, the L2 cache 115 may create a new data access request for forwarding which replaces the received data access request.

In use, a data access request appearing at the port 113 of the ST40 109 is received at an input 207 of the L2 cache 115 and passed to the cache pipeline 203. When cache mode is enabled, the cache pipeline 203 is configured to process the data access request according to normal operation of the L2 cache 115. For example, the pipeline 203 comprises a first stage which decodes the data access request and extracts the memory address of the data specified in the data access request. A second pipeline stage determines whether a copy of the requested data is stored in the cache memory 201. If a copy of the requested data is stored in the cache memory 201, the copy of the data is retrieved from the cache memory 201 in a next pipeline stage. However, if a copy of the requested data is not stored in the cache memory 201 then the next pipeline stage causes the data access request to be forwarded to the system memory 101 via output 209. This stage may implement the cache's prediction policy by requesting retrieval of more data than required. When the requested data is subsequently passed to the L2 cache 115, a further stage of the cache pipeline 203 implements the cache's prediction, selection and replacement policies to optionally select a cache location in the cache memory 201 for storing the retrieved data. In any case, a final stage of the cache pipeline 203 forwards the retrieved data to the ST40 109. Configuration of the various stages of the cache pipeline 203 is controlled by a first set of configuration registers 205a in the register bank 205. Appropriate values may be written to the configuration registers 205a to properly configure the cache pipeline 203.

The L2 cache 115 also comprises a data access request monitor 211 (referred to below as a monitor). When trace mode is enabled, the monitor 211 is configured to monitor data access requests received by the L2 cache 115, to examine the contents of the data access requests, and to capture information relating to those requests. The monitor 211 passes the captured information to the cache memory 201 for storage. In the embodiment described below, the information captured by the monitor 211 is stored in the cache memory 201 in the form of one or more entries, each entry corresponding to one data request. Each entry has a predetermined format and size and comprises one or more fields, each field corresponding to a particular type of information associated with a data access request (such as the memory address, time of the data access, data size or identity of the requesting device). In the embodiment described below, entries for successive data access requests are stored at successive locations within the cache memory 201. However, in other embodiments, the captured information may be stored in any other suitable way. For example, alternative sizes, and formats for the entries could be used.

When cache mode is disabled and trace mode is enabled, the operation of the cache pipeline 203 needs to be modified. In particular, since the trace mode is intended for capturing information for generating statistics relating to data access requests issued during normal execution of a software application, it is desirable that the application executes as normally as possible, even during a trace. In order to execute normally, data access requests resulting from execution of the application need to be properly serviced otherwise the application would stall. Therefore, even when in trace mode, the L2 cache 115 must ensure that any data access requests received by it can be properly serviced. However, since the cache memory 201 is used in trace mode to stored captured information relating to data access requests, the cache memory 201 cannot be used to cache data in the manner described above, meaning that the L2 cache 115 cannot service any data access requests itself during trace mode.

Therefore, to ensure that data access requests are properly serviced during trace mode, the cache pipeline 203 is configured to forward each received data access request to the system memory 101 (or the next level in the cache hierarchy if provided), without checking the contents of the cache memory 201 as described above. The system memory 101 can then properly service the data access request by returning the requested data to the L2 cache 115. When the requested data is subsequently provided to the L2 cache 115, the cache pipeline 203 is configured to forward the data to the ST40 109 without attempting to cache the data in the cache memory 201 (since the cache memory 201 is used to store captured information).

In one alternative embodiment, the L2 cache 115 is capable of performing normal caching operations while at the same time providing trace mode functionality, meaning that trace mode and cache mode may be enabled simultaneously. In this embodiment, the cache memory 101 comprises a first portion and a second portion. The first and second portions may comprise one or more contiguous regions of the cache memory 101 for example. When cache mode and trace mode are enabled simultaneously, the first region of the cache memory 101 is used for caching data and the second region is used for storing information captured by the monitor 211. When trace mode is disabled, the cache memory 101 may be used solely for storing cached data and when cache mode is disabled, the cache memory 101 may be used solely for storing captured information. By partitioning the cache memory 101 in this way, a smaller amount of memory available for caching data and for storing captured information. In one embodiment, the sizes of the regions may be selectable. In this arrangement, when cache mode is enabled, the cache pipeline is arranged to perform standard caching operations as described above, regardless of whether trace mode is enabled or disabled. When trace mode is enabled, the L2 cache 115 is configured to capture information relating to data access requests in the manner described above, regardless of whether cache mode is enabled or disabled.

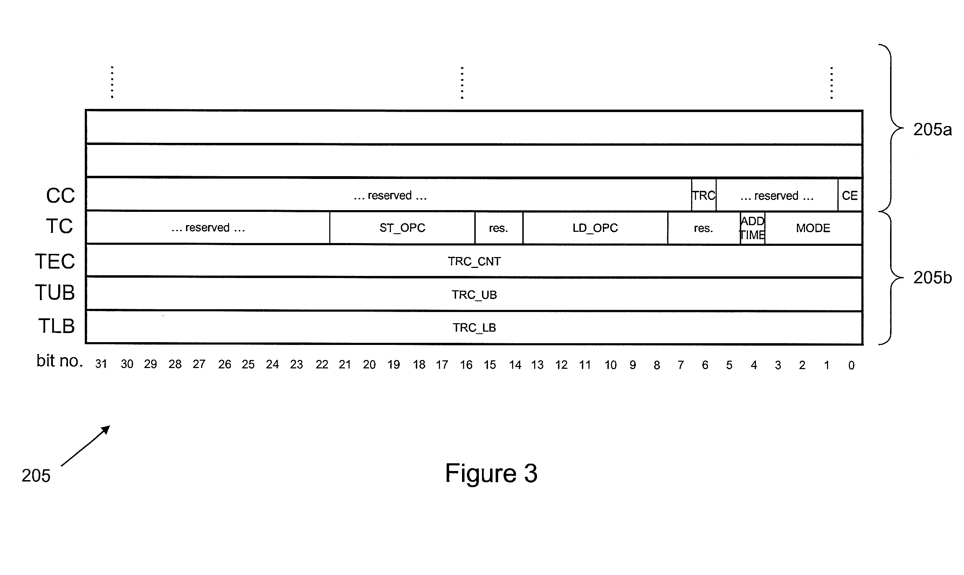

The configuration of the monitor 211 is controlled by a second set of configuration registers 205b in the register bank 205. The second set of configuration registers 205b may be written to, for example, by the processor 105 or the cache pipeline 203. Then, during trace mode operation, the monitor 211 reads the values stored in the configuration registers 205b and is configured accordingly, as described in greater detail below. The bank of configuration registers 205 are illustrated in Figure 3 in greater detail. In the illustrated embodiment, each configuration register is 32 bits in size, although other sizes of register could be used. The registers are divided into various fields to which values may be written. The value written to a field F of a register R may be indicated by the notation R.F.

The first set of configuration registers 205a comprises a register, referred to below as the Cache Control (CC) register, used to switch the L2 cache 115 between trace mode and cache mode. Bit 0 of the CC register is a single-bit Cache Enable (CE) field which allows the cache mode to be enabled or disabled. In particular, when the bit in the CE field is set (i.e. when a value of 1 is written to the CE field), the cache mode operation of the L2 cache 115 is enabled, and when the bit in the CE field is cleared (i.e. when a value of 0 is written to the CE field), the cache mode is disabled. Bit 6 of the CC register is a single-bit TRaCe Enable (TRC) field which allows the trace mode to be enabled or disabled in a similar way. In embodiments in which the L2 cache 115 cannot be in cache mode and trace mode at the same time, the CE and TRC field bits cannot be set at the same time. Therefore, in these embodiments, in order to set the TRC field bit (to enter trace mode), the CE field bit must be cleared (to disable cache mode). The CE field bit may be cleared before the TRC field bit is set, or at the same time. However, as described above, in other embodiments, the L2 cache 115 may be placed in cache mode and trace mode at the same time. In some embodiments cache mode and trace mode may be disabled at the same time.

In use, the cache pipeline 203 and monitor 211 read the values of CC.CE and CC.TRC respectively and are configured accordingly. For example, when the CE field bit is set, the cache pipeline is configured to perform standard L2 cache operations as described above. When the TRC field bit is set, the monitor is activated, otherwise the monitor 211 is not activated.

The remaining bits of the CC register (which in this example are bits 1:5 and bits 7:31) are reserved for controlling other aspects of cache control or for extending functionality in future designs.

The second set of configuration registers 205b comprises a register, referred to below as the Trace Control (TC) register, used to control the functionality of the trace mode. Bits 0:3, of the TC register form a four-bit MODE field used to select a particular trace mode. As described in greater detail below, two possible trace modes are provided in the illustrated embodiment: one-shot mode and continuous mode. In one-shot mode, information is captured only for a limited duration (for example until the cache memory 201 is full), while in continuous mode, information is captured indefinitely until specifically stopped. A particular trace mode may be selected by writing the appropriate value to the MODE field. For example, writing a value of 0000 to the MODE field activates continuous mode, while writing a value of 0001 to the MODE field activates one-shot mode. In other embodiments, additional modes may be activated by writing other values to the MODE field.

One of the items of information which may be captured during a trace is the system time at which a data request was made. In the illustrated embodiment, the capture of system time information by the monitor 211 is optional. Bit 4 of the TC register is a single-bit ADD_TIME field used to control whether system clock time information associated with data requests is captured by the monitor 211 and stored in the cache memory 201. When the bit in the ADD_TIME field is set (i.e. when a value of 1 is written to the ADD_TIME field), the monitor 211 will be configured to capture the system clock time of data access requests. In the illustrated embodiment, the system clock time of a data request is the value of the system clock at the time the monitor 211 detects the data access request. When the bit in the ADD_TIME field is cleared (i.e. when a value of 0 is written to the ADD_TIME field), system clock time information is not captured by the monitor 211. In this example the system clock value is a 32-bit value that increments on each clock cycle and wraps around to zero when the maximum value is reached (i.e. 2³²-1). Therefore, if the processor has a clock speed of 500 MHz, for example, a 32 bit clock value will wrap around approximately every 8.6 seconds. Since the wrap around time of the clock value may be relatively short compared to the length of time the application is executing, it may be necessary to manipulate the captured clock values during analysis to obtain useful time values by taking into account both the clock speed and the clock wrapping.

The monitor 211 may be arranged to capture information only for those data access requests which satisfy certain criteria. For example, in the illustrated embodiment, the monitor 211 is configurable to capture information for access requests relating to data of certain sizes only. For this purpose, the TC register comprises two further fields, a six-bit LD_OPC field formed of bits 8:13, and a six bit ST_OPC field formed of bits 16:21. These fields are used to store values specifying the sizes of data for which data access requests are captured. The LD_OPC field relates to data load requests and the ST_OPC field relates to data store requests.

In the illustrated embodiment, each bit of LD_OPC field is associated with a predetermined data size. For example, consecutive bits of the LD_OPC field (i.e. bits 8, 9, 10, 11, 12 and 13 of the TC register) are associated with load access requests of 1 byte, 2 bytes, 4 bytes, 8 bytes, 16 bytes and 32 bytes respectively. If a particular bit of the LD_OPC field is set, then this will configure the monitor 211 to capture information relating to load requests involving a data size associated with the bit that is set. Information relating to load requests involving data sizes associated with cleared bits is not captured. Multiple bits in the LD_OPC field may be set at the same time. For example, if bits 8 and 10 are set then information is captured for data load requests of 1 byte and 4 bytes. The ST_OPC field of the TC register is used in a similar way to the LD_OPC field except that the ST_OPC filed relates to data store requests. This mechanism allows the information that is captured to be filtered based on the size of the data requested.

The remaining bits of the TC register, which in this example are bits 5:7, 14:15 and 22:31, are reserved for controlling other aspects of trace control or for extending functionality in future designs.

The second set of configuration registers 205b comprises a further register, referred to below as the Trace Event Count (TEC) register, used to point to the next available location in the cache memory 201 for storing information captured by the monitor 211. The TEC register consists of a single 32-bit field, referred to below as the TRC_CNT field. When a new entry is written to the cache memory 201 by the monitor 211, the entry is written to the location in the cache memory 201 identified by the value stored in the TRC_CNT field. Once the new entry has been written, the value stored in the TRC_CNT is incremented to point to the next available location in the cache memory 201.

The amount by which the value stored in the TRC_CNT field is incremented depends of the size of the entry written to the cache memory 201. This, in turn, depends on how much information is captured for the corresponding data request. For example, in one embodiment, address information is always captured for every data access request, while time information is only optionally captured depending on the state of the ADD_TIME field bit of the TC register. If both address and time information is captured for each data request then 8 bytes are required for each entry in the cache memory 201. In this case, the value stored in the TRC_CNT field is incremented by 8 when a new entry is added to the cache memory 201. However, if only address information is captured, only 4 bytes are required for each entry, In this case, the value stored in the TRC_CNT field is incremented by 4 when a new entry is added to the cache memory 201. It can be seen that, in this example, the appropriate increment amount may be determined from the value of the ADD_TIME field bit of the TC register. If additional or alternative information is captured then the increment amount will need to be adjusted accordingly.

If the size of each entry stored in the cache memory 201 is the same, as in the illustrated embodiment, then the value stored in the TRC_CNT field is proportional to the number of entries. The maximum number of entries that can be stored in the cache memory 201 is equal to the size of the cache memory 201 divided by the size of each entry. For example, if the cache memory 201 is 512kB and the size of each entry is 8 bytes (e.g. in the case that both address and time information is captured) then 65536 entries may be stored. However, if the size of each entry is 4 bytes (e.g. in the case that only address information is captured) then 131072 entries may be stored. By including the system time in the captured information, the maximum number of entries is halved. The size of the entries may be selectable to allow a trade off between the maximum number of entries and the quality and quantity of information captured. If more information is captured for each data access request then the maximum number of entries will be smaller. The number of bits used to store each item of information may also be varied. For example, decreasing the number of bits used to store a memory address lowers the resolution of the address information captured, but decreases the size of each entry, thereby increasing the maximum number of entries.

In one embodiment, the L2 cache 115 may be configured (for example by setting an interrupt bit in one of the configuration registers 205) so that an interrupt is generated if the value stored in the TRC_CNT field exceeds a threshold. The threshold may be set such that an interrupt is generated when the cache memory 201 is full, or is about to become full. In the former case, the threshold may be set to be equal to the highest memory address of the cache memory 201, and in the latter case, the threshold may be set to a slightly lower value so that the threshold is exceeded before the cache memory 201 is completely full. The interrupt may be used, for example, to trigger a process in which the contents of the cache memory 201 are transferred to another memory. In one-shot mode, the interrupt may be used to trigger termination of the trace.

As mentioned above, the LD_OPC and ST_OPC fields of the TC register allow the information that is captured to be filtered based on the size of the data requested. However, the information that is captured may also be filtered based on other criteria. For example, in the illustrated embodiment, the monitor 211 is also configurable to capture information for access requests relating to memory addresses falling within a particular range or set of ranges only. For this purpose, the second set of configuration registers 205b comprises two further register, referred to below as the Trace Lower Boundary (TLB) register and the Trace Upper Boundary (TUB) register. These registers each comprise a single 32-bit field, referred to respectively as TRC_LB and TRC_UB, used to define the lower and upper boundaries of an address window. Information is only captured for those data requests relating to memory addresses falling within this window. No information is captured for data requests relating to memory addresses falling outside the window. A memory address may be regarded as falling within the window if the memory address is lower than the value stored in the TRC_UB field and higher than the value stored in the TRC_LB field.

In one embodiment, the window may be set in steps of 1kB and the upper and lower boundaries of the window are aligned to 1 kB addresses. In this case, the 10 lowest significant bits of the values stored in each of the TRC_LB and TRC_UB fields will be zero. In one embodiment, a value of zero written to the TRC_LB field indicates a window with no lower limit and a value of zero written to the TRC_UB field indicates a window with no upper limit. Therefore, if a value of zero is written to both the TRC_LB and TRC_UB fields the window is boundless, in which case no filtering based on memory addresses is performed.

In the illustrated embodiment, the TC, TUB and TLB registers may not be written to while a trace is running. In order to write values to these registers, the trace mode must first be disabled by clearing the TRC field bit of the CC register. Any attempts to write values to the TC, TUB and TLB registers are ignored while the TRC field bit of the CC register is set. This mechanism prevents reconfiguration of the trace mode in the middle of a trace, ensuring consistency of information captured during the trace. If the type of information captured during a trace could be modified mid-trace, then this could make analysis of the collected information significantly more difficult.

The monitor 211 is able to capture information relating to a data access request by examining the contents of the data access request. For example, in one embodiment, each data access request comprises a field containing the memory address at which the requested data is stored. A data request may also comprise one or more codes or values specifying other characteristics of the data request. For example, a code may indicate whether the data request is a load request or a store request, the origin of the data request or the size of the portion of data being requested. The monitor 211 also reads the values stored in the second set of configuration registers to determine what information should actually be captured. The monitor 211 then extracts the relevant information from the data access request, constructs an entry containing the relevant information in the appropriate format, and transmits the entry to the cache memory 201 for storage.

In one embodiment, the memory address field in each data access request is 32 bits in size, while all memory addresses specified in each data access request are aligned to 32 byte boundaries. This means that the 5 lowest order bits of each memory address will always be zero. These redundant bits may be used to encode information within the data request as described above. For example one of the bits may be used to specify whether the access request is a load or store operation. The other four bits may be used to store an code specifying the size of the data requested and/or the origin of the data request.

The one-shot and continuous modes of operation will now be described. In one-shot mode, a single trace action is performed in which information capture begins, proceeds for a time and then stops automatically. Information capture may be continued by initiating a new trace. In one embodiment, a trace using one-shot mode is stopped automatically once the cache memory 201 is full. In other embodiments, a trace using one-shot mode may be stopped according to other conditions, for example if a fixed or specified length of time has elapsed. Once the trace has completed, the contents of the cache memory 201 may be read and transferred to another memory, such as the system memory DRAM 101, for analysis. The cache memory 201 may be accessed for data transfer via line 213 shown in Figure 2.

In another embodiment, data is transferred from the cache memory 201 using control registers. For example, a first register may be provided to store an index to the cache memory 201 and a second register may be provided to store the portion of data identified by the index that is read from the cache memory 201. This arrangement eliminates the need for a separate output line 213. In addition to allowing the contents of the cache memory 201 to be transferred to another memory or data destination, the register may also be useful for other purposes. For example, the registers may also be useful for verification (to confirm the design is functionally correct) or for product engineering (to help isolate the location of manufacturing faults).

In one embodiment, an interrupt is generated when the value of TEC.TRC_CNT exceeds a threshold. For example, the threshold may be set so that an interrupt is generated when the value of TEC.TRC_CNT reaches the top of the cache memory 201, thereby signalling that the cache memory 201 is full. The interrupt causes the application that generates the data access requests to temporarily stall so that the existing captured data can be read from the cache memory 201 before additional information is captured. The interrupt may be serviced by an interrupt handler which halts the trace and initiates the task of reading the contents of the cache memory 201. Once the data has been transferred, the value stored in the TRC_CNT field of the TEC register may be reset to the lowest memory address of the cache memory 201, the interrupt may be cleared, the application restarted and a new trace initiated, if required.

In another example, the threshold is set to a lower value so that the interrupt is generated a short time in advance of the cache memory 201 actually becoming completely full. This is because there may be a short delay between the interrupt being generated and the application that generates data access requests actually being stalled. This may result in some data access requests being issued by the application even after the interrupt is generated. Therefore, if the interrupt is generated only once the cache memory is completely full, then information relating to data access requests issued after the interrupt was generated (i.e. after the cache memory is completely full) could not be stored, and would thus be lost. Setting the threshold to a lower value provides a short time period following the generation of the interrupt during which the application can be stalled before the cache memory becomes completely full, thereby preventing loss of information.

In continuous mode, a trace is free-running in the sense that, once initiated, it continues indefinitely until it is specifically stopped. In one embodiment using continuous mode, the cache memory 201 functions as a circular buffer so that when the value of TEC.TRC_CNT reaches the top of the cache memory 201, the value of TEC.TRC_CNT is wrapped back to the bottom of the cache memory 201. As a result, when the cache memory 201 is full, new entries in the cache memory 201 overwrite existing entries at the bottom of the cache memory 201. Therefore, in continuous mode, the cache memory 201 contains entries relating to the N most recent data access requests (for which information is captured), where N is equal to the number of entries the cache memory 201 can store. In continuous mode, the contents of the cache memory 201 may be read out periodically, or each time the value of TEC.TRC_CNT reaches the top of the cache.

The process of performing a trace will now be described. Before a trace begins, the processor 105 first clears the CE field bit of the CC register in order to disable the cache mode of the L2 cache 115. Then, the processor 105 selects the type of information to be captured during the trace by writing the appropriate values to the relevant fields of the control registers. For example, the ADD_TIME field bit of the TC register is set or cleared depending on whether or not time information is to be captured. Appropriate values are written to the LD_OPC, ST_OPC fields of the TC register to define which data request are captured based on size of data specified in the requests. Appropriate values are also written to the TRC_LB and TRC_UB fields of the TUB and TLB registers to define which data requests are captured based on the memory addresses of requested data. The processor also selects the desired trace mode (e.g. one-shot mode or continuous mode) by writing the appropriate value to the MODE field of the TC register. Values may be simultaneously written to multiple fields of the same register by writing a single 32 bit value to the register. Finally, to begin the trace, the TRC field bit of the CC register is set by the processor to enable the trace mode.

During the trace, the processor 105 executes a software application which includes various requests for data from main memory 101. Some of these requests may specify data that is cached in the L1 cache 107. These requests can therefore be serviced by retrieving the cached data from the L1 cache 107 and providing the data to the processor 105 without a data access request appearing at the port 113 of the ST40 109. However, some of the requests made by the application may specify data which is not cached in the L1 cache 107. These requests are forwarded by the L1 cache 109 and therefore appear at the port 113 of the ST40 109 and are received by the L2 cache 115.

The monitor 211 detects a data access request received by the L2 cache 115 and captures relevant information relating to the data access request in the manner described above. The information captured will depend on the values written to the configuration registers 205. The monitor 211 then creates a new entry in the appropriate format and transmits the entry to the cache memory 201 where it is stored at the location specified by the current value in the TRC_CNT field of the TEC register. The data request is serviced by the cache pipeline 203 by forwarding the data request to the system memory 101, or to the next layer in the cache hierarchy, as appropriate.

The trace may be stopped or halted at any time by clearing the TRC field bit of the CC register. For example, the trace may be stopped directly by a software application, or as a result of an interrupt. In one-shot mode, the trace is stopped automatically, for example when the cache memory 201 becomes full.

Either after a trace has been stopped (for example in one-shot mode) or while a trace is proceeding (for example in continuous mode), the captured information stored in the cache memory 201 may be transferred to another memory for inspection and analysis. In one embodiment using one-shot mode, if the size of each entry in the cache memory 201 is the same, the number of entries to be read may be calculated from the value stored in the TRC_CNT field of the TEC register at the time the trace was stopped. For example, the number of entries may be calculated using NO_ENTRIES = (TRC_CNT - CM_START)/ENTRY_SIZE where CM_START is the memory address of the lowest entry in the cache memory 201 and ENTRY_SZE is the size of each entry. In continuous mode, the entire contents of the cache memory 201 may be read out to obtain a history of the N most recent data access requests for which information was captured.

The information captured during a trace may be analysed in any suitable way, for example using a software application. The analysis may be performed to assess the performance of the L1 cache 107 and/or the L2 cache 115, and/or further lower level caches. For example, since the captured information relates to data requests that resulted in cache misses in the L1 cache 107, the information may be used to suggest ways in which the L1 cache may be improved. For example, if the captured information indicates that the data requests relate disproportionately to certain ranges of memory addresses, then the L1 cache replacement policy may be modified to favour retaining data associated with those addresses. However, assessing the performance of the L1 cache 107 may be made easier by also observing the data accesses that hit the L1 cache 107, which may not always be possible.

The analysis may also comprise simulating the L2 cache 115. For a given sequence of data access requests, the simulation may keep track of what the state and contents of a real L2 cache would be when using particular prediction, selection and replacement policies. The simulation could then be used to generate statistics such as cache hit and miss rates. The captured information, representing a history of data access requests during a trace, could be input into the simulation to generate the relevant statistics. The simulation may be run many times using the same captured information, but using different policies, to see how the performance of an L2 cache varies. Since, in the embodiments described above, it is possible to observe the data accesses that are received by the L2 cache 115, and since it is also possible, by way of simulation for example, to determine which data accesses cause hits and misses in the L2 cache, these embodiments are well suited for assessing the performance of the L2 cache 115.

In one embodiment, information may be captured for all data access requests (and not only those which caused a L1 cache miss) by disabling the L1 cache. This would result in the L2 cache receiving all data access requests. However, in this case the cache memory 201 may fill up with captured information very quickly depending on the number and rate of data access requests.

In many cases, it may not be possible to perform a trace without altering the performance of the system and the software application executed by the processor 105. For example, since the L2 cache does not operate as a cache (or does not operate exclusively as a cache) during a trace, the L1 cache would face a greater burden of data caching than if the trace were not performed and this is likely to have an effect on the performance of the cache memory system. In addition, during a trace, some data requests received by the L2 cache 115 would be serviced with a higher latency than if the trace were not performed. For example, during trace mode, some data access requests that would otherwise be serviced directly by the L2 cache 115 would need to be serviced instead by forwarding the data access request, resulting in higher latency. Such a factor is likely to affect the performance of the software application. Changes in performance of the application may also have an impact on the performance of the cache memory system, and vice versa, since these two aspects of the system closely interact.

In some embodiments, the effect on system performance by performing a trace may be smaller if only a single application is running compared to if multiple applications are running simultaneously. For example, if only a single application in running, the pattern of L1 cache 107 misses may be similar regardless of whether or not the L2 cache 115 functions fully, or partially, as a cache. However, when time-slicing is used to run multiple applications, the impact may be a greater since the longer execution time means that less processing is done between time slices. However, if time slices are relatively infrequent, the overall impact may be relatively small.

For these reasons, the analysis performed on captured data may need to take into account that the trace itself may affect the validity of the captured information, at least to a certain extent. In one-shot mode, the duration of the trace may be relatively short in comparison to the length of execution of the software application. The effect of the trace on the validity of the captured information is therefore likely to be relatively small. However, the statistics and analysis will be based on a relatively short period of execution of the application. In continuous mode, the effect of the trace on the validity of the captured information is likely to be larger than in one-shot mode. However, the statistics and analysis will be based on a longer duration of execution of the application. The choice between one-shot mode and continuous mode may be made according to these considerations.

Implementation of the trace mode functionality described above in a standard cache may be achieved by providing a monitor within the cache for monitoring data access requests received by the cache and for capturing information relating to data access requests. As mentioned above, since the existing cache memory is used to store the captured information, an additional dedicated trace buffer is not required. Furthermore, the configuration registers used to configure the monitor in some embodiments may comprise an extension of an existing set of configuration registers in the cache. It can be seen, therefore, that relatively minor modifications of an existing cache design are required.

A cache memory system including the trace mode functionality described above may be embedded into a product to provide the manufacturer of the cache memory system and/or the product with a clearer and more thorough understanding of the memory access patterns of the production hardware and software. This information may then be used to influence the design of the next generation of cache memory systems as well as allowing the configurable aspects of a current design to be fine tuned to maximise performance. Furthermore, although the trace mode functionality may be used for testing cache designs before a design is finalised (e.g. during the design stage prior to full-scale manufacture), embodiments of the invention may also be used to configure or reconfigure caches after the cache design is finalised. For example, the cache may be initially configured by the manufacturer before distribution or may be reconfigured by an end user. In the latter case for example, the cache mode may be disabled and the trace mode enabled during use to perform a trace and generate statistics used to aid reconfiguration of the system. The cache mode may then be re-enabled to return to normal operation. The trace mode functionality, as well as aiding design and configuration of a cache memory system, may also be used to aid design and configuration of associated application software. For example, the statistics generated using the trace mode may be used to reconfigure badly configured software used by a system.

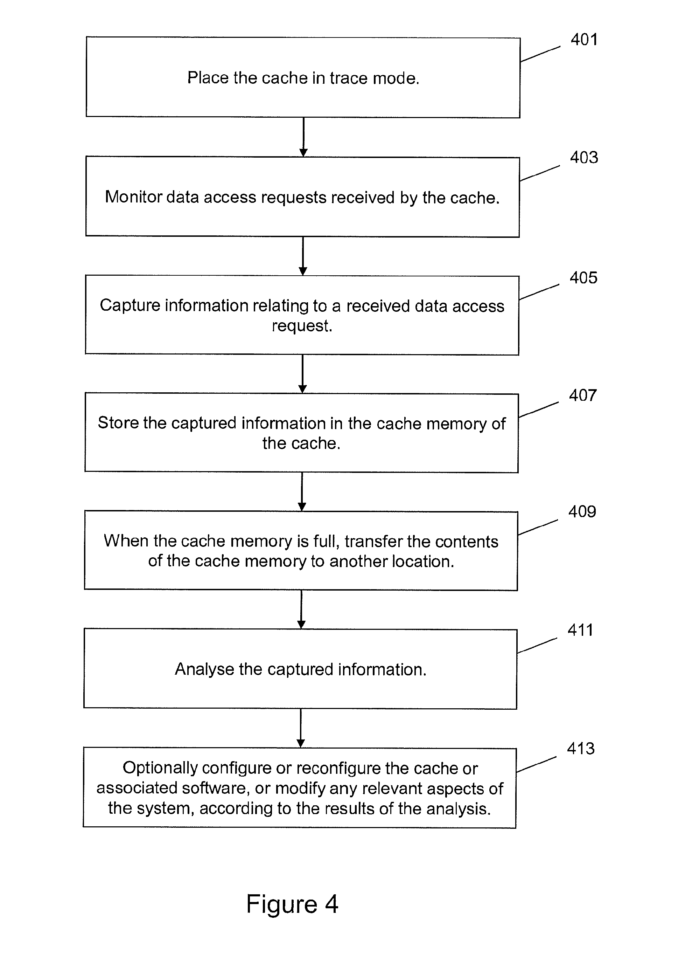

Figure 4 is a flow diagram for one exemplary method for capturing information relating to data access requests received by a cache, such as an L2 cache described above. The cache is configurable to operate in at least a cache mode and a trace mode. In the first step 401, the cache is placed in trace mode. In the next step 403, data access requests received by the cache are monitored. In the next step 405, information relating to a received data access request is captured. In the next step 407, the captured information is stored in the cache memory of the cache. In the next step 409, when the cache memory is full, the contents of the cache memory are transferred to another location. In the next step 411, the captured information is analysed. In the next step 413, the cache or associated software may be configured or reconfigured, or any relevant aspects of the system may be modified, according to the results of the analysis.

While several exemplary embodiments of the invention have been described above, various modifications to these embodiments will readily occur to a person skilled in the art. Furthermore, the skilled person will appreciate that the various individual features described may be used in any suitable combination.

## Claims

1. A cache, the cache being configurable to operate in at least a cache mode and a trace mode, the cache comprising: a cache memory; means for processing data access requests received by the cache; a monitor; and means for selecting the cache mode and/or the trace mode;
wherein when the cache is operating in the cache mode: the cache memory is arranged to store a copy of a portion of data that is stored in another memory external to the cache; and the means for processing data access requests is arranged to process a received data access request by retrieving a copy of a portion of data identified in the received data access request from the cache memory if the cache memory stores a copy of the portion of data, or by forwarding the data access request to a data access request processing means external to the cache if the cache memory does not store a copy of the portion of data;
wherein when the cache is operating in the trace mode: the monitor is arranged to monitor data access requests received by the cache and capture information relating to a received data access request; and the cache memory is arranged to store the information captured by the monitor.

2. A cache according to claim 1 in which the monitor comprises means for deriving at least some of the captured information relating to a data access request from the contents of the data access request.

3. A cache according to claim 1 or 2 in which the information captured by the monitor comprises one or more of: the memory address of requested data, the size of the requested data, the system time of the data access request and the origin of the data access request.

4. A cache according to any preceding claim in which the monitor comprises means for capturing information relating to a data access request only if the information relating to that data access request satisfies one or more information criteria; and in which the cache further comprises means for specifying one or more parameters associated with the one or more information criteria.

5. A cache according to claim 4 in which the information criteria include one or more of: the address of the requested data falls within one or more memory address ranges defined by the means for specifying one or more parameters; the size of the requested data is equal to one of one or more sizes specified by the means for specifying one or more parameters; and the type of the information is one of one or more types defined by the means for specifying one or more parameters.

6. A cache according to claim 4 or 5 in which the means for specifying one or more parameters associated with the one or more information criteria comprise one or more information criteria configuration registers.

7. A cache according to any preceding claim in which the cache comprises means for generating an interrupt when operating in the trace mode and when the amount of information stored in the cache memory exceeds a threshold.

8. A cache according to claim 7 in which the cache comprises means for reading the contents of the cache memory out of the cache when an interrupt is generated.

9. A cache memory according to any preceding claim further comprising means for stopping information capture by the cache.

10. A cache memory according to claim 9 in which the means for stopping information capture comprises means for stopping information capture by the cache when one or more trace criteria are satisfied.

11. A cache memory according to claim 10 in which the trace criteria includes one or more of: the amount of information stored in the cache memory exceeds a threshold; and a certain period of time has elapsed since information capture began.

12. A cache according to any preceding claim in which, when the cache is operating in the trace mode, the means for processing data access requests is arranged to process the received data access request by forwarding the data access request to a data access request processing means external to the cache.

13. A cache according to any of claims 1 to 11 in which, when the cache is operating in trace mode and cache mode, the cache memory comprises a first portion for storing the copy of the portion of data that is stored in another memory external to the cache and a second portion for storing the information captured by the monitor.

14. A system comprising:
- a system memory;
- a processor arranged to issue data access requests for retrieving data stored in the system memory; and
- a cache interposed between the processor and the system memory, the cache being arranged to intercept data access requests issued by the processor, wherein the cache comprises a cache according to any preceding claim.

15. A method for capturing information relating to data access requests received by a cache comprising a cache memory, the cache being configurable to operate in at least a cache mode and a trace mode; the method comprising the steps of:
- placing the cache in the trace mode;
- monitoring data access requests received by the cache;
- capturing information relating to a received data access request; and
- storing the captured information in the cache memory.
